# EUROPEAN PATENT SPECIFICATION

(11) **EP 3 582 306 B1**
(45) Date of publication and mention of the grant of the patent: **14.06.2023**
(21) Application number: 18751894.9
(22) Date of filing: 08.02.2018
(51) Int. Cl.: H01M 4/66, H01M 4/13, H01M 10/42, H01M 10/052

(54) **CURRENT COLLECTOR, ELECTRODE, AND NON-AQUEOUS ELECTROLYTE SECONDARY BATTERY**
STROMABNEHMER, ELEKTRODE UND SEKUNDÄRE BATTERIE MIT WASSERFREIEN ELEKTROLYTEN
COLLECTEUR DE COURANT, ÉLECTRODE ET BATTERIE SECONDAIRE À ÉLECTROLYTE NON AQUEUX

(30) Priority: 10.02.2017 JP 2017023469
(43) Date of publication of application: 18.12.2019
(73) Proprietor: Mitsui Chemicals, Inc., Tokyo 104-0028 (JP)
(72) Inventor: YAMAMOTO Shinji, Sodegaura-shi Chiba 299-0265 (JP); MIZUNO Yu, Sodegaura-shi Chiba 299-0265 (JP); ENDO Yuri, Sodegaura-shi Chiba 299-0265 (JP)
(74) Representative: J A Kemp LLP
(86) International application number: PCT/JP2018/004477
(87) International publication number: WO 2018/147390

(56) References cited:
- EP-A1- 2 899 783
- EP-A1- 2 903 063
- EP-A1- 2 922 123
- WO-A1-2014/046112
- WO-A1-2014/077384
- WO-A1-2016/093095
- JP-A- 2013 530 497

## Description

### Technical Field

The present invention relates to a current collector, an electrode, and a non-aqueous electrolyte secondary battery.

### Background Art

In recent years, lithium ion secondary batteries have been widely used as power sources for electronic devices such as portable phones, notebook personal computers, and the like, electric vehicles, power storages, or the like. Particularly, in recent years, there has been a rapidly increasing demand for a battery with a high capacity, a high power, and a high energy density, which can be mounted in a hybrid vehicle or an electric vehicle. In spite of the advantage of a high energy density, the lithium ion secondary battery is required to provide a sufficient measure for safety because lithium metal and a non-aqueous electrolyte are used.

Conventionally, in this case, a method in which a safety valve releases increased internal pressure, a method in which a PTC device of which resistance increases in accordance with heat generated from an external short-circuit to cut off an electric current is incorporated in a battery, or the like, has been proposed. There is a method in which, a conductive layer is provided, as a PTC device, on a surface of a current collector and a crystalline thermoplastic resin (for example, a crystalline polyethylene resin) is contained in the conductive layer, such that, in a case in which a temperature in a battery exceeds a melting point of the crystalline thermoplastic resin, a resistance of the conductive layer rapidly increases to cut off a current between the current collector and an active material layer. In addition, there has been reported a technology for reducing an internal resistance during a normal operation while providing a function for increasing the internal resistance in a case in which a temperature rises, by containing a conductive material and polyvinylidene fluoride (PVDF) as a binding material in a conductive layer interposed between a current collector and an electrode mixture layer and controlling crystallinity of the PVDF, that is, a mass ratio of an α crystal and a β crystal (see Patent Document 1).

Alternatively, there has been reported a current collector, used in a secondary battery or a capacitor, that includes a metal foil and a conductive layer having a thickness of from 0.1 µm to 10 µm formed on a surface of the metal foil, in which the conductive layer includes a conductive material and a binder material, and a melting point of the binder material is controlled, whereby the current collector has an excellent high-rate characteristic and exhibits a sufficient safety function (for example, see Patent Document 2).

### Prior Art

### Patent Document

Patent Document 1: Japanese Patent Application Laid-Open (JP-A) No. 2012-104422
Patent Document 2: WO 2014/010708

### SUMMARY OF INVENTION

### Technical Problem

The invention provides a non-aqueous electrolyte secondary battery in which a resistance of a conductive layer increases in response to an instantaneous temperature rise of a battery by forming the conductive layer having a PTC function on a surface of a current collector used in the non-aqueous electrolyte secondary battery.

### Solution to Problem

According to an embodiment of the invention, there is provided a current collector for a non-aqueous electrolyte secondary battery, the current collector including:
a conductive substrate; and
a conductive layer that is provided on at least one surface of the conductive substrate, the conductive layer containing a conductive filler and a binding material,
wherein the binding material contains polyvinylidene fluoride, as a binding component, and a positive thermal coefficient ("PTC") function-imparting component,
wherein the PTC functional imparting component is a copolymer of poly(vinylidene fluoride-hexafluoropropylene) or a copolymer of poly(vinylidene fluoride-oxyethylene), and
wherein the PTC function-imparting component lowers one or more of a melting start temperature or a melting peak temperature of the binding material, which is measured by differential scanning calorimetry under coexistence of a non-aqueous electrolyte, as compared to a case of using only the binding component.

### Advantageous Effects of Invention

A current collector according to the invention has advantageous that at least a part of the binding material contained in the conductive layer formed on a surface thereof is melted in response to the instantaneous temperature rise of the battery, and the resistance of the conductive layer is increased, such that thermal runaway of the non-aqueous electrolyte secondary battery is suppressed.

### BRIEF DESCRIPTION OF DRAWINGS

Fig. 1 is a cross-sectional view of a stack-type non-aqueous electrolyte secondary battery according to an embodiment of the invention.
Fig. 2 is a cross-sectional view of a wound-type non-aqueous electrolyte secondary battery according to another embodiment of the invention.
Fig. 3 is a cross-sectional view showing a structure of an electrode (cathode) according to an embodiment of the invention.
Fig. 4 shows typical heat resistance curves of an aluminum current collecting foil with a PTC layer, which are measured in examples.

### DESCRIPTION OF EMBODIMENTS

Hereinafter, preferred embodiments of the invention are described. The embodiments can be widely applied to a variety of kinds of non-aqueous electrolyte secondary batteries including an electrode in which an electrode active material is held by a current collector. In this kind of battery, by forming a conductive layer (hereinafter, sometimes referred to as the "PTC layer") having a PTC function on a surface of the current collector according to the embodiment, a resistance between the current collector and the active material can be increased when the temperature of the battery rises, and an effect of suppressing overheating of the battery can be exhibited. Hereinafter, the invention is described in more detail mainly by taking a cathode including an electrode mixture layer containing a cathode active material and a current collector, and a lithium ion secondary battery including the cathode, as an example, but there is no intention to limit a subject to which the invention is applied to such an electrode or battery.

### [Overall Configuration of Non-Aqueous Electrolyte Secondary Battery]

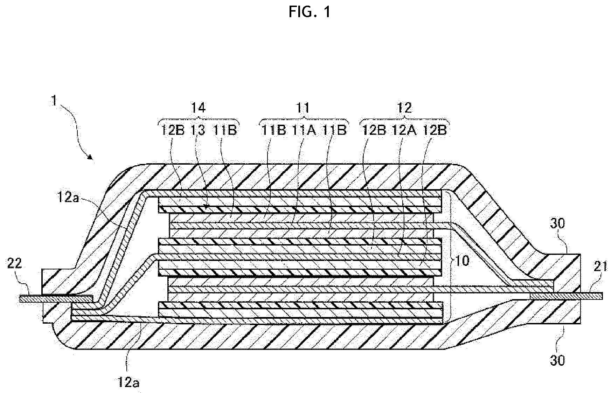

First, an overall configuration of a non-aqueous electrolyte secondary battery according to an embodiment of the invention is described with reference to the drawings. Fig. 1 is a cross-sectional view schematically showing a non-aqueous electrolyte secondary battery according to an embodiment of the invention. Such a non-aqueous electrolyte secondary battery is referred to as a stack-type lithium ion secondary battery.

As shown in Fig. 1, a non-aqueous electrolyte secondary battery 1 of the embodiment has a configuration in which a battery element 10 to which a cathode lead 21 and an anode lead 22 are attached is enclosed inside an exterior body 30 formed of a laminate film. In the embodiment, the cathode lead 21 and the anode lead 22 are led-out in directions opposite to each other from the inside to the outside of the exterior body 30. Note that, although not shown, the cathode lead and the anode lead may be led-out in the same direction from the inside to the outside of the exterior body. Such a cathode lead and an anode lead can be attached to a cathode current collector and an anode current collector described below by, for example, ultrasonic welding or resistance welding.

As shown in Fig. 1, the battery element 10 has a configuration in which a cathode 11, a separator 13, and an anode 12 are stacked in a multilayer form, the cathode 11 including cathode active material layers 11B formed on both main surfaces of a cathode current collector 11A, the anode 12 including anode active material layers 12B formed on both main surfaces of an anode current collector 12A. In this case, the cathode active material layer 11B formed on one main surface of the cathode current collector 11A in one cathode 11 faces the anode active material layer 12B formed on one main surface of the anode current collector 12A in the anode 12 adjacent to the one cathode 11 with the separator 13 interposed therebetween. In such a way, the cathode, the separator, and the anode are sequentially stacked in a multilayer form.

An electrolytic solution containing an electrolyte (LiPF₆) is injected, such that the cathode active material layer 11B, the separator 13, and the anode active material layer 12B adjacent to one another constitute one single cell layer 14. Accordingly, the lithium ion secondary battery 1 of the embodiment has a configuration in which a plurality of single cell layers 14 are stacked so as to be electrically connected in parallel to one another. Each of the cathode and the anode may have a configuration in which each active material layer is formed on one surface of each current collector.

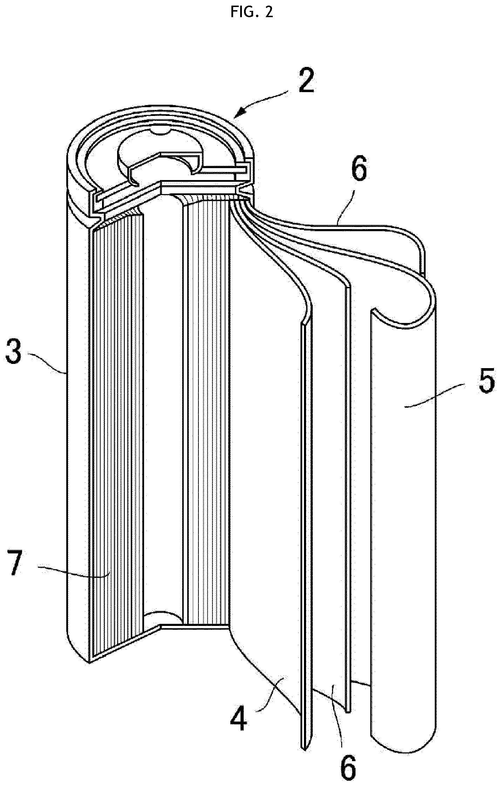

Fig. 2 is a view schematically showing an example of a non-aqueous electrolyte secondary battery according to another embodiment of the invention. Such a non-aqueous electrolyte secondary battery is referred to as a wound-type lithium ion secondary battery. As shown in Fig. 2, a cathode 4, a separator 6, an anode 5, and a separator 6 are stacked and wound, and then are press-formed, thereby obtaining a battery element 7, the cathode 4 including cathode active material layers formed on both main surfaces of a cathode current collector, the anode 5 including anode active material layers formed on both main surfaces of an anode current collector. In this case, the cathode active material layer formed on one main surface of the cathode current collector in one cathode 4 faces the anode active material layer formed on one main surface of the anode current collector in the anode 5 adjacent to the one cathode 4 with the separator 6 interposed therebetween. In addition, the other cathode active material layer faces the other anode active material layer with the separator interposed therebetween. In such a way, the cathode, the separator, and the anode sequentially face one another.

An insulating layer (not shown) may be provided on an outer circumstance of the single cell layer so as to be insulated from the adjacent cathode current collector or anode current collector. Such an insulating layer is preferably formed of a material holding an electrolyte contained in an electrolyte layer and preventing liquid leakage of the electrolyte on the outer circumstance of the single cell layer. Specific examples of the material of the insulating layer can include general-purpose plastic such as polypropylene (PP), polyethylene (PE), polyurethane (PUR), a polyamide (PA)-based resin, polytetrafluoroethylene (PTFE), polyvinylidene fluoride (PVDF), and polystyrene (PS), or thermoplastic olefin rubber. In addition, silicone rubber can also be used.

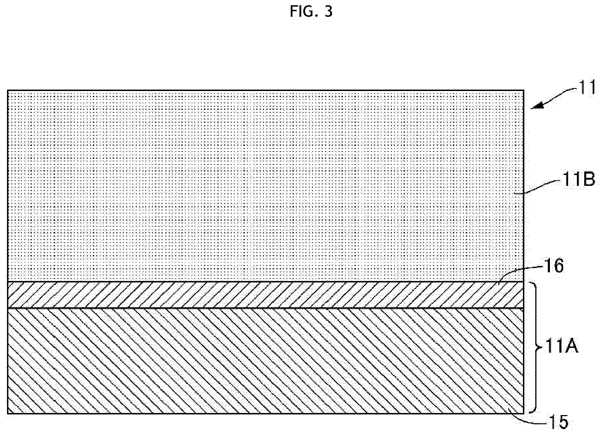

Fig. 3 is a cross-sectional view showing a structure of a cathode 11 as an electrode according to an embodiment. Note that the parts in Fig. 3 corresponding to those in Fig. 1 are given with the same signs and the description thereof is appropriately omitted. The cathode 11 shown in Fig. 3 has a configuration in which a cathode active material layer 11B is provided on one surface of a cathode current collector 11A. A conductive layer 16 having a thickness of from 0.1 µm to 10 µm is formed between the cathode current collector 11A and the cathode active material layer 11B. The conductive layer 16 contains a conductive filler and a binding material. The conductive layer 16 is in contact with an electrolytic solution containing an electrolyte (LiPF₆) injected in the battery, together with the cathode active material layer 11B.

### [Current Collector]

As shown in Fig. 3, the cathode current collector 11A according to the embodiment includes the conductive layer 16 on a surface of a conductive substrate 15. The conductive substrate 15 can be formed of various materials, but usually can be formed of a metal or an alloy. Specifically, examples of a material of the conductive substrate for a cathode include aluminum, nickel, or SUS, and examples of a material of the conductive substrate for an anode include copper, nickel, or SUS. Among them, aluminum or copper is preferable in terms of a balance between the high conductivity and the cost. Aluminum refers to aluminum and an aluminum alloy, and copper refers to pure copper and a copper alloy. In the embodiment, an aluminum foil can be used for a cathode of a secondary battery and an anode for a secondary battery, and a copper foil can be used for an anode for a secondary battery. A material of the aluminum foil is not particularly limited, but pure aluminum such as A1085, or A3003 can be used. In addition, a material of the copper foil is also not particularly limited, but a rolled copper foil or an electrolytic copper foil is preferably used.

The thickness of the conductive layer 16 of the embodiment is from 0.1 µm to 10 µm. When the thickness is less than 0.1 µm, there may be a case in which a resistance is not sufficiently decreased at the time of abnormal heat generation, and a shut down function may not be certainly exhibited. When the thickness is greater than 10 µm, even the resistance at the normal time may be high, resulting in deterioration of battery characteristics at a high rate. The thickness of the conductive layer 16 may be, for example, 0.1, 0.3, 0.5, 1, 2, 5, or 10 µm. Hereinafter, the conductive filler and the binding material which constitute the conductive layer are described in order.

### (Conductive Filler)

Examples of a material of the conductive filler preferably include a carbon material such as graphite, Ketjen black, acetylene black, furnace carbon black, or thermal carbon black. Alternatively, conductive metal powder such as nickel power may be used. Those materials may be used singly, or in combination of two or more kinds thereof. Graphite and/or Ketjen black is more preferably used, and graphite is particularly preferably used.

The kind of graphite is not particularly limited, and any form of graphite such as granular graphite, scale-like graphite, expanded graphite, and colloidal graphite can be used. As carbon powder, various carbon blacks and graphite powders can be used. Among them, carbon black such as furnace carbon black, acetylene black, and Ketjen black, or carbon nanotube is preferable.

A formulation amount of the conductive filler is not particularly limited, but it is preferable that the conductive filler is formulated so that a value of % by mass of the conductive filler is from 10 to 50% in a case in which the entirety of the conductive layer 16 is taken as 100%. When the formulation amount of the conductive filler is too small, the number of contacting points between the conductive fillers is small, and an electrical resistance at a normal temperature may thus become high. When the formulation amount of the conductive filler is too large, the contact between the conductive fillers is maintained even when a temperature rises. Thus, it is difficult to exhibit the shut down function. The value may be, for example, 10, 15, 20, 25, 30, 35, 40, 45, or 50%.

### (Binding Material)

The binding material contains polyvinylidene fluoride (PVDF) as a binding component and a PTC function-imparting component. The binding component is required to have adhesion to current collect metal, which is achieved by the presence of a polar group in the binding component. In addition, the binding component needs to have sufficient flexibility to handle an electrode, and to correspond to a dimensional variation of an active material during a charge and discharge cycle. The binding component needs to provide specific electrochemical characteristics and to have compatibility with a non-aqueous electrolytic solution to be used.

A copolymer is formed by the binding component and the PTC function-imparting component, such that the binding material contains a polyvinylidene fluoride copolymer containing a PTC function-imparting component (poly(vinylidene fluoride-hexafluoropropylene) (PVDF-HFP) or poly(vinylidene fluoride-oxyethylene) (PVDF-PEO)).

Since the binding material has a sufficient flexibility to handle an electrode and corresponds to a dimensional variation of an active material during a charge and discharge cycle, the binding material can be a mixture including a polyvinylidene fluoride (PVDF) and a copolymer of a polyvinylidene fluoride containing a PTC functional component (poly(vinylidene fluoride-hexafluoropropylene) (PVDF-HFP) or poly(vinylidene fluoride-oxyethylene) (PVDF-PEO)).

Mechanical characteristics and electrochemical characteristics of PVDF are suitable for the several purposes required for the binding component. Although it is reported that a melting point of PVDF alone is approximately 180°C, it is considered that the melting point thereof is slightly lowered because it is in contact with a non-aqueous electrolyte in a non-aqueous electrolyte secondary battery. By containing the PTC function-imparting component, the binding material of the embodiment is melted when the temperature of the non-aqueous electrolyte secondary battery rises, and a resistance of the conductive layer is increased, such that thermal runaway of the non-aqueous electrolyte secondary battery can be suppressed. From the viewpoint of suppressing thermal runaway, a melting start temperature of the binding material is preferably low, but in a case in which the melting start temperature is too low, a function of the binding material is inhibited, which is not preferable. Therefore, the melting start temperature of the binding material is preferably from approximately 60°C to approximately 150°C, more preferably from approximately 65°C to approximately 130°C, and still more preferably from approximately 70°C to approximately 100°C.

A melting peak temperature (melting point) of the binding material may be also lowered as the melting start temperature of the binding material is lowered. The melting peak temperature of the binding material is preferably from 70°C to 130°C under the measurement conditions. The melting peak temperature of the binding material is preferably 70°C or higher from the viewpoint of thermal stability. Meanwhile, the melting point of the binding material is preferably 130°C or lower from the viewpoint of stability. The melting point of the binding material is more preferably lower than 130°C, still more preferably 120°C or lower, and further still more preferably 110°C or lower.

The term "PTC function-imparting component" in the embodiment refers to a component which imparts a PTC function to the binding material by lowering one or more of a melting start temperature or a melting peak temperature of PVDF, or enhances the PTC function. A relationship between the positive thermal coefficient (PTC) function in which a resistance value increases as the temperature rises, and melting of PVDF is considered as follows. For example, in a case in which a short-circuit current flows through an electrode, the temperature of the electrode rises due to the short-circuit heat generation. In this case, it is assumed that, in a case in which the binding material in the conductive layer (PTC layer) disposed between the electrode and the current collector is melted, the conductive filler which is an inorganic material is wound together to form a fibril (fibrous)-shaped structure, which changes the form in the conductive layer, such that at least a part of a conductive path is blocked and the resistance of the conductive layer increases. Such a function is preferably exhibited by lowering one or more of a melting start temperature or a melting peak temperature of the binding material. Therefore, the melting start temperature and/or the melting peak temperature of the binding material of the embodiment is lower than that in a case of a usual binding material alone.

Accordingly, the binding material of the embodiment may be selected from the one which lowers one or more of a melting start temperature or a melting peak temperature of the mixture of PVDF as a binding component and PTC function-imparting component, which is measured by differential scanning calorimetry under coexistence of a non-aqueous electrolyte, as compared to a case of using only PVDF, which is measured under the same conditions. In the embodiment, the melting start temperature means a temperature at which heat absorption to be analyzed by a differential scanning calorimetry (hereinafter, also referred to as DSC) rises from the baseline, and generally can be measured in accordance with JIS 7121 (a method of measuring plastic transition temperature). For more clarity, the melting start temperature may be a temperature at which 10%, about 20%, or about 50% of heat absorption of a top peak of a heat absorption peak is observed. Alternatively, a heat absorption amount due to melting of the binding material is calculated from a peak area of a DSC curve, and a temperature corresponding to approximately half of the total heat absorption amount may be taken as an index of the melting start temperature. This is because the heat absorption starts from a lower temperature since the melting start temperature of the binding material is decreased, and the PTC function is exhibited when reaches a certain absorption amount.

### (Method of Measuring Melting Point and Melting Start Temperature)

For example, a device such as high sensitivity type differential scanning calorimeter DSC7000X manufactured by Hitachi High-Tech Science Corporation is used. PVDF and a PTC function-imparting component are dissolved in an organic solvent or are mixed in a powder form as it is in a mortar or the like, approximately 3 mg of the dried powder is placed in an aluminum pan, and then a non-aqueous electrolyte is added to the aluminum pan, thereby obtaining a sample. The non-aqueous electrolyte added to the sample is preferably an electrolytic solution in which a lithium salt containing at least LiPF₆ as an electrolyte is dissolved in an organic solvent selected from cyclic carbonate or linear carbonate singly, or a solvent mixture in which a plurality of kinds thereof is combined. In the embodiment, a non-aqueous electrolyte obtained by dissolving 1 M of lithium hexafluorophosphate (LiPF₆) in a mixed solution in which a ratio of ethylene carbonate (EC) to ethyl methyl carbonate (EMC) is 3:7 is used. As the measurement conditions, for example, a temperature rises from room temperature to approximately 200°C at 5°C/min. It can be determined by the heat absorption curve obtained at this time.

The PTC function-imparting component is not particularly limited as long as it is a copolymer of poly(vinylidene fluoride-hexafluoropropylene) or a copolymer of poly(vinylidene fluoride-oxyethylene) capable of lowering the melting start temperature and the melting peak temperature of PVDF used as the binding component. However, a compound having a compatibility (suitable) with PVDF which is a crystalline polymer can be used, and preferably a crystalline or amorphous polymer compound can be used for the material of the PTC function-imparting component. In the specification, the term "compatibility" refers to a state in which two different materials, in particular, polymers are uniformly mixed, and these materials may be completely compatible or may be partially compatible with each other. It is possible to determine as to whether the sample is uniformly mixed by confirming that the sample after mixing is transparent or has a film forming ability.

In general, it has been known that, in a case in which a crystalline polymer compound has compatibility with an amorphous polymer compound, a melting point of the crystalline polymer compound is lowered. The factor which has the greatest influence on the lowering of the melting point is a thermodynamic parameter χ₁₂ value representing strength of an interaction between both polymers, and is derived by Flory-Huggins theory. Based on the theory, it is considered that, in a compatible crystalline/amorphous polymer blend system, a melting point is lowered in a case in which the χ₁₂ value represents a negative value.

A content of the PTC function-imparting component contained in the binding material is preferably from 1 to 50 % by mass, more preferably from 2 to 40 % by mass, and still more preferably from 5 to 30 % by mass. In a case in which the content of the PTC function-imparting component is less than 1 % by mass, the melting point lowering action of the binding component is small, and in a case in which the content of the PTC function-imparting component is more than 50 % by mass, a binding force of the binding material with the electrode active material may be deteriorated.

The binding material of the embodiment is preferably prepared as a mixture obtained by dissolving a polyvinylidene fluoride (PVDF) as a binding component and a PTC function-imparting component in a common solvent which dissolves both components, performing solvent substitution, and then precipitating the solvent. This is because the binding material prepared by this method exists in a state in which the binding component and the PTC function-imparting component are uniformly mixed at a molecular level.

In another embodiment, a polyvinylidene fluoride (PVDF) and a PTC function-imparting component may be mixed by a powder mixer such as a ball mill or a rocking mixer or a known crusher to prepare a powdery mixture. This is because the powdery mixture is easily uniformed in a solvent and used as a binding material when preparing an electrolytic solution or an electrode mixture layer.

### (PVDF Copolymer)

The PTC function-imparting component is a copolymer of a vinylidene fluoride monomer and another fluorine-containing monomer or an oxygen-containing monomer. The PTC function-imparting component is a poly(vinylidene fluoride-hexafluoropropylene) (PVDF-HFP) or a poly(vinylidene fluoride-oxyethylene) (PVDF-PEO). The copolymer contained in the binding material is preferably more than 50 % by mass, and is preferably from 1 to 75 % by mass.

Alternatively, in another embodiment, a polyvinylidene fluoride (PVDF) copolymer containing PVDF which is a binding component and a PTC function-imparting component in a molecule may be used as a binding material. In this case, it is preferable that one or more of a melting start temperature or a melting peak temperature of the PVDF copolymer, under coexistence of a non-aqueous electrolyte, is lowered as compared to a case of using only the PVDF which is a homopolymer of vinylidene fluoride. For example, the melting start temperature and/or the melting peak temperature of the PVDF copolymer is preferably from 50°C to 100°C, and more preferably from 60°C to 90°C. As such a PVDF copolymer, PVDF-HFP, PVDF-PEO, is used.

A formulation amount of the binding material is not particularly limited, but it is preferable that the binding material is formulated so that a value of % by mass of the binding material is from 20 to 70% in a case in which the entirety of the conductive layer is taken as 100%. In a case in which the formulation amount of the binding material is too large, the number of contacting points between the conductive fillers is small, and an electrical resistance at a normal temperature may thus become high. In a case in which the formulation amount of the binding material is too small, the contact between the conductive fillers is maintained even when a temperature rises. Thus, it is difficult to exhibit the shut down function.

### (Insulating Crystalline Polymer)

The conductive layer of the embodiment may contain an insulating crystalline polymer for further enhancing the PTC function. Examples of the insulating crystalline polymer include polyethylene, polypropylene, an ethylene-based copolymer such as an ethylene-glycidyl methacrylate, and copolymer of an ethylene-vinyl acetate, polyester, and an acid modified material thereof, and one or more among them can be selected and used. Among them, a polymer having high crystallinity is preferably used from the viewpoint of the PTC function of the conductive layer, and polyethylene, polypropylene, and an ethylene-based copolymer are preferably used.

From the viewpoint of the PTC function of the conductive layer, an average particle diameter (D50) of the insulating crystalline polymer is 10 µm or less, and ultrahigh molecular weight polyethylene particles having volume frequency of an average particle diameter of 40% or more is preferably used. In a case in which the ultrahigh molecular weight polyethylene particles contained in the conductive layer have the average particle diameter (D50) of 10 µm or less and the volume frequency of the average particle diameter of 40% or more, since the insulating crystalline polymer particles can be uniformly dispersed in the conductive layer, the conductive path in the conductive layer can be efficiently blocked when a temperature of the conductive layer rises, and since the insulating crystalline polymer particles act as a resistance increaser (a spacer), interface contact between the conductive layer and an aluminum current collecting foil is efficiently cut off, which can further enhance the PTC function.

In a case in which the ultrahigh molecular weight polyethylene particles have a melting point of 130°C or more and a volume specific resistance of from 10⁻¹⁵ to 10⁻¹⁶ Ω·m, the action as the resistance increaser (the spacer) can be further enhanced.

An average particle diameter of insulating crystalline particles is not particularly limited, but is usually from 0.1 µm to 10 µm, preferably from 0.5 µm to 7 µm, and more preferably from 1 µm to 5 µm. In a case in which the average particle diameter of the crystalline particles is in the above range, a uniform film of 10 µm or less can be formed as a conductive layer. By adding the insulating crystalline polymer, the conductive path is efficiently blocked when a temperature of the conductive layer rises and the PTC function can be further enhanced. The addition amount in a case in which the insulating crystalline polymer is added is from 1 to 50 % by mass with respect to the entirety of the conductive layer.

### (Insulating Inorganic Oxide)

A conductive layer of another embodiment may contain insulating inorganic oxide particles such as alumina, aluminum hydroxide, boehmite, magnesia, magnesium hydroxide, zirconia, titania, silica, silicon dioxide, silicon carbide, aluminum nitride, or boron nitride. Among them, alumina is preferable and α-alumina is particularly preferable. α-Alumina is chemically stable and high pure α-alumina is particularly stable. Since alumina is less likely to be reacted with a non-aqueous electrolyte or to be oxidized or reduced, it is less likely to adversely affect a battery.

An average particle diameter of the inorganic oxide particles is not particularly limited, but is preferably from 0.01 to 5 µm. In the embodiment, the average particle diameter is a volume median diameter. The amount of inorganic oxide particles in the conductive layer is preferably from 1 to 50 % by mass. Therefore, a sufficient PTC function is imparted to the conductive layer, resulting in further enhancing stability of a battery.

In the specification, the term "average particle diameter" is in accordance with JIS Z8825, and represents an index such as a particle diameter (D50) at which a cumulative volume calculated from a small diameter side of a particle diameter distribution (volume basis) reaches 50%, the particle diameter distribution being measured by a laser diffraction method.

### (Other Components)

In addition to the conductive filler and the binding material, appropriate components to be used for producing the conductive layer may be contained in the conductive layer according to the embodiment. For example, in a case in which the conductive layer is formed of a mixture slurry, various blended components derived from the mixture slurry may be contained in the conductive layer. Examples of the various blended components derived from the mixture slurry include other additives such as a thickener, a surfactant, a dispersant, a wetting agent, and an antifoaming agent. The conductive layer of the embodiment may optionally contain a cathode active material; however, a content thereof is preferably limited from the viewpoint of effectively exhibiting the PTC function. For example, a content of an oxide in which lithium (Li) and nickel (Ni) are contained as the constituent metal elements described below, as the cathode active material, is less than 10 % by mass, preferably less than 5 % by mass, and more preferably less than 1 % by mass.

### (Method of Producing Current Collector)

An example of a method of producing the current collector in which such a conductive layer 16 is formed includes a method in which a paste obtained by dispersing the above-mentioned conductive filler and the binding material, and an insulating crystalline polymer as necessary, or optional components, in a solvent is coated and dried on the conductive substrate 15. Each of the components may be dissolved in the solvent to be used and may be dispersed in a fine particle form. The solvent may be an organic solvent or water. The coating method is not particularly limited, but a known method such as a casting method, a bar coater method, a dip method, and a gravure method can be used. Similarly to the drying method, drying by a heating treatment in a hot air circulating passage can be used.

### [Electrode]

An electrode constituting the non-aqueous electrolyte secondary battery of the embodiment includes the cathode active material layer 11B or the anode active material layer 12B containing a cathode active material or an anode active material formed on the conductive layer 16, respectively. The electrode may be either a cathode or an anode.

### (Cathode Active Material)

The cathode active material is not particularly limited as long as it is a material capable of charging and discharging lithium and may be a cathode active material usually used in a lithium ion secondary battery. Specifically, in addition to the oxide in which lithium (Li) and nickel (Ni) are contained as the constituent metal elements, the oxide encompasses an oxide containing at least one metal element (that is, transition metal element and/or typical metal element other than Li and Ni) other than lithium and nickel as a constituent metal element in an amount of equal to nickel or less than nickel based on the number of atoms. The metal element other than Li and Ni may be, for example, one or two or more metal elements selected from the group consisting of Co, Mn, Al, Cr, Fe, V, Mg, Ca, Na, Ti, Zr, Nb, Mo, W, Cu, Zn, Ga, In, Sn, La, and Ce. These cathode active materials may be used singly, or in combination of two or more kinds thereof.

In a preferred embodiment, an example of the cathode active material includes lithium-nickel-cobalt-aluminum-based oxide (NCA) represented by General Formula (1): LiₜNi_{1-x-y}CoₓAl_{y}O₂ (wherein 0.95 ≤ t ≤ 1.15, 0 ≤ x ≤ 0.3, 0.1 ≤ y ≤ 0.2, and x + y < 0.5). A specific example of NCA includes LiNi_{0.8}Co_{0.15}Al_{0.05}O₂.

In another preferred embodiment, an example of the cathode active material includes lithium-nickel-cobalt-manganese-based oxide (NCM) represented by General Formula (2): LiNiₐCo_{b}Mn_{c}O₂ (wherein 0 < a < 1, 0 < b < 1, 0 < c < 1, and a + b + c = 1). NCM has a high energy density per volume unit and has excellent thermal stability.

A content of the cathode active material in the electrode mixture layer is usually 10 % by mass or more, preferably 30 % by mass or more, more preferably 50 % by mass or more, and particularly preferably 70 % by mass or more. In addition, the content of the cathode active material in the electrode mixture layer is usually 99.9 % by mass or less and preferably 99 % by mass or less.

### (Anode Active Material)

Examples of the anode active material can include at least one selected from metal lithium, a lithium-containing alloy, a metal or alloy capable of alloying with lithium, an oxide capable of doping and dedoping of lithium ions, a transition metal nitride capable of doping and dedoping of lithium ions, and a carbon material capable of doping and dedoping of lithium ions (these may be used singly, or may be used a mixture including two or more kinds thereof).

Examples of the metal or alloy capable of alloying with lithium (or lithium ions) include silicon, a silicon alloy, tin, and tin alloy. In addition, the anode active material may also be lithium titanate.

Among them, the carbon material capable of doping and dedoping of lithium ions is preferable. Examples of such a carbon material include carbon black, activated carbon, a graphite material (artificial graphite or natural graphite), and an amorphous carbon material. The form of the carbon material may be any of a fibrous form, a spherical form, a potato form, and a flake form.

Specific examples of the amorphous carbon material include hard carbon, coke, a mesocarbon microbead (MCMB) calcined at 1500°C or lower, and a mesophase pitch carbon fiber (MCF).

Examples of the graphite material include natural graphite and artificial graphite. Graphitized MCMB and graphitized MCF are used as the artificial graphite. In addition, a compound containing boron can be used as the graphite material. Furthermore, a graphite material coated with a metal such as gold, platinum, silver, copper, or tin, a graphite material coated with an amorphous carbon, and a mixture of amorphous carbon and graphite can also be used as the graphite material.

These carbon materials may be used singly, or a mixture of two or more kinds thereof.

### (Conductive Auxiliary Agent)

The electrode mixture layer preferably contains a conductive auxiliary agent. An example of the conductive auxiliary agent used in the invention can include a known conductive auxiliary agent. The known conductive auxiliary agent is not particularly limited as long as it is a carbon material having conductivity, but graphite, carbon black, a conductive carbon fiber (carbon nanotube, carbon nanofiber, or carbon fiber), and fullerene can be used singly, or in combination of two or more kinds thereof. Examples of commercially available carbon black include, but are not limited to, TOKABLACK #4300, #4400, #4500, #5500, or the like (furnace black, manufactured by Tokai Carbon Co., Ltd.), Printex L or the like (furnace black, manufactured by Degussa AG), Raven 7000, 5750, 5250, 5000 ULTRAIII, 5000 ULTRA, or the like, Conductex SC ULTRA, Conductex 975 ULTRA, or the like, PUER BLACK 100, 115, 205, or the like (furnace black, manufactured by Columbian Chemicals Company), #2350, #2400B, #2600B, #30050B, #3030B, #3230B, #3350B, #3400B, #5400B, or the like (furnace black, manufactured by Mitsubishi Chemical Corporation), MONARCH 1400, 1300, 900, Vulcan XC-72R, Black Pearls 2000, LITX-50, LITX-200, or the like (furnace black, manufactured by Cabot Corporation), Ensaco 250G, Ensaco 260G, Ensaco 350G, or Super P-Li (manufactured by TIMCAL Japan), Ketjen Black EC-300J or EC-600JD (manufactured by Akzo Nobel), and Denka Black, Denka Black HS-100 or FX-35 (acetylene black, manufactured by Denka Company Limited), or the like. Examples of graphite include artificial graphite or natural graphite such as scaly graphite, lump graphite, and earthy graphite, but are not limited thereto. However, the carbon material is not limited thereto, and a conventionally known material used as an anode active material for a lithium ion secondary battery can be used. These anode active materials may be used singly, or in combination of two or more kinds thereof. A content of the conductive auxiliary agent contained in the electrode mixture layer is preferably 1 % by mass or more, and is preferably, for example, about from 1 to 10 % by mass.

### (Method of Forming Electrode Mixture Layer)

A mixture layer including the electrode for a non-aqueous electrolyte secondary battery of the embodiment may be produced by coating an electrode mixture slurry containing the above-mentioned electrode active material and conductive auxiliary agent, and a binding agent on a surface of the current collector and performing drying. Examples of a material of the binding agent for binding the electrode active material can include a fluororesin represented by PVDF, a polysaccharide polymer, and styrene butadiene rubber (SBR), but are not limited thereto. In addition, a binding material contained in the conductive layer can be used. In this case, an electrode mixture slurry in which the electrode active material and the conductive auxiliary agent are dispersed in a solvent obtained by dissolving the above-mentioned binding material in a solvent is preferably formed. The amount of binding material contained in the electrode mixture slurry can be, for example, about from 1 to 10 % by mass of the entire solid component. In a case in which the content of the binding material is less than 1 % by mass, the blocking effect of the conductive path when the temperature of the mixture layer rises is reduced. Meanwhile, in a case in which the content of the binding material exceeds 10 % by mass to generally exhibit insulating property, contact resistance in the mixture layer increases and the battery capacity deteriorates, which is not preferable.

The solvent contained in the mixture slurry is also commonly used with the common solvent when preparing the binding material, and an aprotic polar solvent represented by N-methyl pyrrolidone, dimethyl sulfoxide, propylene carbonate, dimethyl formamide, and γ-butyrolactone or a mixed liquid thereof can be selected.

A method of coating a mixture slurry onto the current collector and drying the mixed slurry is not particularly limited. Examples of the method include a slot-die coating method, a slide coating method, a curtain coating method, and a gravure coating method. Examples of the drying method include drying using warm air, hot air, or low-humidity air, vacuum drying, and drying using (far) infrared rays. Drying time and drying temperature are not particularly limited, but the drying time is usually from 1 minute to 30 minutes, and the drying temperature is usually from 40°C to 180°C.

It is preferable that a method of producing the mixture layer includes a step of coating the mixture slurry onto the current collector and drying the mixture slurry, and then performing a pressure treatment to reduce porosity of the active material layer by using a mold press or a roll press.

### [Electrolytic Solution]

The electrolytic solution is preferably an electrolytic solution usually used on the lithium ion secondary battery, and more specifically, has the form in which a supporting salt (lithium salt) is dissolved in an organic solvent. Examples of the lithium salt include at least one lithium salt selected from an inorganic acid anionic salt such as lithium hexafluorophosphate (LiPF₆), lithium tetrafluoroborate (LiBF₄), lithium perchlorate (LiClO₄), lithium hexafluoroarsenate (LiAsF₆), lithium hexafluorotantalate (LiTaF₆), lithium tetrachloroaluminate (LiAlCl₄), and lithium decachlorodecaborate (Li₂B₁₀Cl₁₀), and an organic acid anionic salt such as lithium trifluoromethanesulphonate (LiCF₃SO₃), lithium bis(trifluoromethanesulphonyl)imide (Li(CF₃SO₂)₂N), and lithium bis(pentafluoroethanesulfonyl)imide (Li(C₂F₅SO₂)₂N). Among them, lithium hexafluorophosphate (LiPF₆) is preferable.

In addition, examples of the organic solvent include at least one organic solvent selected from the group consisting of cyclic carbonate, fluorine-containing cyclic carbonate, linear carbonate, fluorine-containing linear carbonate, aliphatic carboxylate ester, fluorine-containing aliphatic carboxylate ester, γ-lactone, fluorine-containing γ-butyrolactone, cyclic ether, fluorine-containing cyclic ether, chain ether, and fluorine-containing chain ether.

Examples of the cyclic carbonate include propylene carbonate (PC), ethylene carbonate (EC), and butylene carbonate (BC). Examples of the fluorine-containing cyclic carbonate can include fluoroethylene carbonate (FEC). Examples of the linear carbonate include dimethyl carbonate (DMC), diethyl carbonate (DEC), ethyl methyl carbonate (EMC), methyl propyl carbonate (MPC), ethyl propyl carbonate (EPC), and dipropyl carbonate (DPC). Examples of the aliphatic carboxylate ester include methyl formate, methyl acetate, and ethyl propionate. Examples of the γ-lactone include γ-butyrolactone. Examples of the cyclic ether include tetrahydrofuran, 2-methyltetrahydrofuran, and 1,4-dioxane. Examples of the chain ether include 1,2-ethoxyethane (DEE), ethoxymethoxyethane (EME), diethyl ether, 1,2-dimethoxyethane, and 1,2-dibutoxyethane. Other examples include nitrile such as acetonitrile and amide such as dimethylformamide. These organic solvents may be used singly, or in combination of two or more kinds thereof.

### [Separator]

Examples of a form of the separator include a microporous film, a porous flat plate, or a nonwoven formed of a resin such as polyethylene (PE), polypropylene (PP), polyester, cellulose, and polyamide. A preferred example includes a porous resin sheet having a single layer or multilayer structure and mainly formed of one or two or more kinds of polyolefin. A thickness of the separator is, for example, from 15 µm to 30 µm. In a preferred embodiment, a separator, having a single layer or multilayer structure and including a porous resin layer (when a temperature reaches a predetermined temperature, a resin is melted and pores are clogged, such that a current is cut off) exhibiting the shut down function, is used.

### EXAMPLES

### [Melting Point Measurement of Binding Material Coexisting with Non-Aqueous Electrolyte by DSC]

### <PVDF List>

Kinds and features of PVDF used as the binding component are shown in Table 1 below.

**[Table 1]**

| Manufacturer | Product Name | | Feature | |
|---|---|---|---|---|
| KUREHA | PVDF | W#7200 | Medium viscosity | High molecular weight |
| | | W#7300 | High viscosity | Ultrahigh molecular weight |
| | | W#9300 | Medium viscosity | Modified-ultrahigh molecular weight |
| ARKEMA | PVDF | KYNAR 711 | Low viscosity | Low molecular weight |
| | | KYNAR 761 | Medium viscosity | Medium molecular weight |
| | | HSV 900 | High viscosity | High molecular weight |
| Solvay | PVDF | Solef 5130 | High viscosity | Ultrahigh molecular weight functionalized |

### <PTC Function-imparting Agent List>

Lists of compounds used as the PTC function-imparting components are shown in Table 2 below.

**[Table 2]**

| PTC Function-imparting Component | Chemical Name | Molecular Weight |
|---|---|---|
| BMI-1000 + BTA = 2 : 1 | 4,4'-Diphenylmethane maleimide + barbituric acid = 2:1 | - |
| PVDF-HFP (2851) | Poly(vinylidene fluoride-co-hexafluoropropylene) | Low HFP content |
| PVDF-HFP (2801) | | Medium HFP content |
| PVDF-HFP (2501) | | High HFP content |
| PVDF-HFP (2751) | | High HFP content |

### <Sample Preparation>

PVDF and various PTC function-imparting components (powder) were mixed at a predetermined ratio using an agate mortar for approximately 15 minutes. For example, in a case in which a mixing ratio of the PVDF (powder) to the PTC function-imparting component (powder) is 1 : 1, 0.1 g of the PVDF and the PTC function-imparting component each were weighed and mixed. The mixed powder was vacuum-dried at room temperature (25°C) for 10 hours or longer. 3 mg of the sample was weighed and placed into a SUS-PAN for DSC measurement which was weighed in advance. Subsequently, 6 mg of an electrolytic solution (1M-LiPF₆/3EC7EMC) was added to the SUS-PAN (a mass ratio of powder to electrolytic solution is 1 : 2). At this time, a state in which the powder was almost dipped in the solution was visually confirmed, and a lid (weighed in advance) was quickly set (weighed) and then hermetic sealing was performed with a dedicated press.

### <Measurement>

The melting temperature was measured under conditions of a scanning speed of 5°C/min and a temperature from room temperature to 210°C using a high-sensitivity differential scanning calorimeter DSC7000X device manufactured by Hitachi High-Tech Science Corporation.

### <Results>

Examples of the DSC measurement results of PVDF (manufacturers and product names), as comparative examples, are shown in Table 3.

**[Table 3]**

| Manufacturer | Product Number | % by mass | Melting Temperature | |
|---|---|---|---|---|
| | | | Start Temperature °C | Peak Temperature °C |
| KUREHA | W#7200 | 100 | 95 | 135 |
| | W#7300 | 100 | 90 | 128 |
| | W#9300 | 100 | 88 | 130 |
| ARKEMA | KYNAR 711 | 100 | 92 | 100 |
| | KYNAR 761 | 100 | 87 | 95 |
| | HSV 900 | 100 | 80 | 95 |
| Solvay | Solef 5130 | 100 | 90 | 140 |

Table 4 shows the melting start temperature and the melting peak temperature (melting point) when 75 weight% of the binding component (PVDF) and 25 weight% of the PTC function-imparting component and 50 weight% of the binding component (PVDF) and 50 weight% of the PTC function-imparting component were mixed, respectively.

**[Table 4-1]**

| [Table 4] | | | | | |
|---|---|---|---|---|---|
| Binding Material | | | | Melting Point | |
| PVDF | % | [X] | % | Start Temp. deg.C | Peak Temp. deg.C |
| | 75 | BMI-1000 + BTA = 2: 1 | 25 | 89 | 134 |
| | 50 | PVDF-HFP (2851) | 50 | 94 | 118 |
| | 50 | PVDF-HFP (2801) | 50 | 92 | 113 |
| | 50 | PVDF-HFP (2501) | 50 | 93 | 110 |
| | 50 | PVDF-HFP (2751) | 50 | 95 | 112 |
| | 50 | PVDF-HFP (2851) | 50 | 90 | 114 |
| | 50 | PVDF-HFP (2801) | 50 | 90 | 118 |
| | 75 | PVDF-HFP (2751) | 25 | 92 | 120 |
| | 50 | PVDF-HFP (2851) | 50 | 96 | 113 |
| | 50 | PVDF-HFP (2801) | 50 | 96 | 115 |
| | 75 | PVDF-HFP (2751) | 25 | 94 | 117 |

**[Table 4-2]**

| Continuation of [Table 4] | | | | | |
|---|---|---|---|---|---|
| Binding Material | | | | Melting Point | |
| PVDF | % | [X] | % | Start Temp. deg.C | Peak Temp. deg.C |
| | 50 | PVDF-HFP (2851) | 50 | 64 | 105 |
| | 50 | PVDF-HFP (2801) | 50 | 65 | 103 |
| | 75 | PVDF-HFP (2751) | 25 | 62 | 109 |
| | 50 | PVDF-HFP (2851) | 50 | 71 | 88 |
| | 75 | PVDF-HFP (2751) | 25 | 73 | 89 |
| | 50 | PVDF-HFP (2851) | 50 | 81 | 101 |
| | 75 | PVDF-HFP (2751) | 25 | 81 | 100 |
| | 50 | PVDF-HFP (2851) | 50 | 77 | 98 |
| | 75 | PVDF-HFP (2751) | 25 | 77 | 100 |
| | 50 | PVDF-HFP (2851) | 50 | 85 | 125 |
| | 75 | PVDF-HFP (2751) | 25 | 87 | 128 |
| ARKEMA | FLEX2501 (PVDF-HFP) | | 100 | 53 | 93 |
| | FLEX2751 (PVDF-HFP) | | 100 | 48 | 90 |
| | FLEX2801 (PVDF-HFP) | | 100 | 55 | 95 |
| | FLEX2851 (PVDF-HFP) | | 100 | 62 | 99 |

As shown in Table 4, it was found that the mixture of PVDF and additives started to melt from approximately 75°C and the peak temperature thereof was around from 90°C to 130°C.

In addition, it can be seen that, as a result of performing the DSC measurement on PVDF-HFP (manufactured by ARKEMA) which is a PDVF copolymer under the same conditions instead of the mixture of the PVDF and the PVDF function-imparting component, PVDF-HFP started to melt from approximately 50°C and had a melting point (melting peak temperature) of from 90°C to 110°C.

### [Method of Measuring Heat Resistance]

Hereinafter, a method of producing the lithium ion secondary battery produced using the current collector and the electrode according to the invention and characteristics thereof will be described by examples, and prior to that, a method of a heat resistance test performed using a typical cathode will be described.

### [Sample Production]

PTC layers of Tables 6 to 10 were produced by using a PTC specification (composition example) of Table 5 produced in accordance with Reference Example 1 described below. An aluminum tab was bonded to a margin portion of a cathode for a test (one surface coating, electrode surface of 30 mm x 30 mm) to which a cathode specification (C-1) of Table 5 was applied by using an ultrasonic bonding machine (CK1). A nickel tab was bonded to a Cu foil of 2.8 cm x 2.8 cm of an anode for a test to which an anode specification (A-1) of Table 5 was applied by using an ultrasonic bonding machine (AK1). AK1 was brought into contact with the applied surface of CK1 with a PE separator interposed therebetween and was sandwiched by a laminate of 5 cm x 5 cm, and then three sides thereof were heat-sealed. Before injecting an electrolytic solution, the obtained product was reduced-dried with a vacuum drier at 70°C for 12 hours. 300 µL of an electrolytic solution (1mol-LiPF₆, EC/DEC = 3/7 (vol. ratio) was injected, and then heat-sealing was performed while being evacuated (K1).

### [Heat Resistance Measurement]

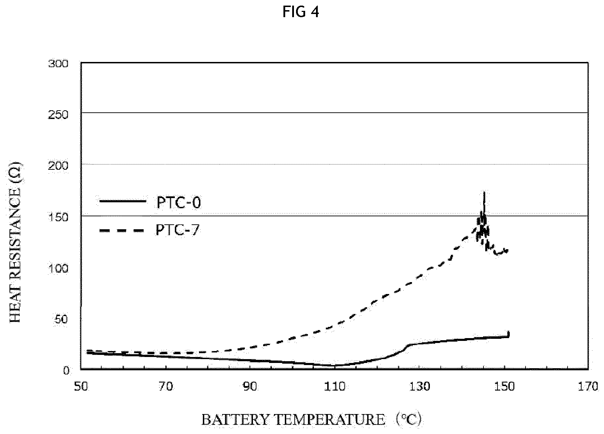

The produced sample cell (K1) was sandwiched by a heat block at a restrictive pressure of 0.2 kgf/cm², and the measurement condition was set to raise the temperature from room temperature to approximately 200°C at 5°C/min. At this time, an alternating resistance value (S2) can be obtained at respective frequencies (for example, 1 kHz, 10 kHz, and 100 kHz). An example of the result is shown below. Tables 6 to 8 show values of resistance increasing start temperatures and maximum resistance values measured for the samples. Fig. 4 shows an example of the heat resistance curve obtained by plotting the results based on the temperature and the alternating resistance value.

**[Table 5]**

| Cathode Specification | | | | | | | | | | | | | | | |
|---|---|---|---|---|---|---|---|---|---|---|---|---|---|---|---|
| Cathode | Cathode Active Material | | Cathode Composition | | | | | | | | | | | | |
| | | | Active Material % | | | Super-P % | | KS6 % | | PVDF 7200 % | | | [X] % | | One Surface Coating Amount mg/cm² |
| C-1 | NCM523 | | 92 | | | 2 | | 2 | | 4 | | | - | | 19.0 |
| C-2 | NCA | | 92 | | | 2 | | 2 | | 4 | | | - | | 17.5 |

| PTC Layer Specification | | | | | | | | | | | | | | | |
|---|---|---|---|---|---|---|---|---|---|---|---|---|---|---|---|
| PTC Layer | | PTC Composition | | | | | | | | | | | | | |
| | | Scale-like Graphite | | Super-P | | | PVDF | | [X] | | | [Y] | | | One Surface Coating Amount |
| | | | | | | | | | | | | Insulator Particle | | | |
| | | % | | % | | | % | | % | | | % | | | mg/cm² |
| Composition Example 1 | | 90.0 | | 2.5 | | | 5 | | 2.5 | | | - | | | 0.5 |
| Composition Example 2 | | 85.0 | | 2.5 | | | 5 | | 2.5 | | | 5(PE) | | | 0.5 |
| Composition Example 3 | | 85.0 | | 2.5 | | | 5 | | 2.5 | | | 5(Al2O3) | | | 0.5 |

| Anode Specification | | | | | | | | | | | | | | | |
|---|---|---|---|---|---|---|---|---|---|---|---|---|---|---|---|
| Anode | | Anode Active Material | | | Anode Composition | | | | | | | | | | |
| | | | | | Active Material % | | | Super-P % | | | PVDF % | | | One Surface Coating Amount mg/cm² | |
| A-1 | | Natural Graphite | | | 93 | | | 1 | | | 6 | | | 11.0 | |

**[Table 6]**

| Heat Measurement Test Results | | | | |
|---|---|---|---|---|
| PTC Layer | PVDF | [X] | Resistance Increasing Start Temperature °C | Maximum Resistance Value Ω |
| PTC-1R | 7200 manufactured by KUREHA | BMI-1000/BTA = 2/1 | 60 | 140 |
| PTC-1 | | ARKEMA FLEX2501 (PVDF-HFV) | 58 | 145 |
| PTC-2 | | ARKEMA FLEX2751 (PVDF-HFV) | 58 | 140 |
| PTC-3 | | ARKEMA FLEX2801 (PVDF-HFV) | 60 | 135 |
| PTC-4 | | ARKEMA FLEX2851 (PVDF-HFV) | 63 | 155 |
| PTC-5 | ARKEMA | FLEX2501 (PVDF-HFV) | 50 | 160 |
| PTC-6 | | FLEX2751 (PVDF-HFV) | 50 | 155 |
| PTC-7 | | FLEX2801 (PVDF-HFV) | 55 | 145 |
| PTC-8 | | FLEX2851 (PVDF-HFV) | 60 | 135 |

**[Table 7]**

| * Addition of PE Particles to PTC Layer | | | | |
|---|---|---|---|---|
| PTC Layer | PVDF | [X] | Resistance Increasing Start Temperature °C | Maximum Resistance Value Ω |
| PTC-2R | 7200 manufactured by KUREHA | BMI-1000/BTA = 2/1 | 60 | 170 |
| PTC-9 | FLEX2501(PVDF-HFP) manufactured by ARKEMA | | 50 | 165 |
| PTC-10 | FLEX2751(PVDF-HFP) manufactured by ARKEMA | | 50 | 160 |
| PTC-11 | FLEX2801(PVDF-HFP) manufactured by ARKEMA | | 55 | 150 |
| PTC-12 | FLEX2851(PVDF-HFP) manufactured by ARKEMA | | 60 | 140 |

**[Table 8]**

| * Addition of Al2O3 Particles to PTC Layer | | | | |
|---|---|---|---|---|
| PTC Layer | PVDF | [X] | Resistance Increasing Start Temperature °C | Maximum Resistance Value Ω |
| PTC-3R | 7200 manufactured by KUREHA | BMI-1000/BTA = 2/1 | 60 | 175 |
| PTC-13 | FLEX2501 (PVDF-HFP) manufactured by ARKEMA | | 50 | 170 |
| PTC-14 | FLEX2751 (PVDF-HFP) manufactured by ARKEMA | | 50 | 165 |
| PTC-15 | FLEX2801 (PVDF-HFP) manufactured by ARKEMA | | 55 | 155 |
| PTC-16 | FLEX2851 (PVDF-HFP) manufactured by ARKEMA | | 60 | 145 |

**[Table 9]**

| * Only PTC Layer | | | | |
|---|---|---|---|---|
| PTC Layer | PVDF | [X] | Resistance Increasing Start Temperature °C | Maximum Resistance Value Ω |
| PTC-17 | 9700 manufactured by KUREHA | FLEX2501 (PVDF-HFP) manufactured by ARKEMA | 50 | 170 |
| PTC-18 | | FLEX2751 (PVDF-HFP) manufactured by ARKEMA | 50 | 165 |
| PTC-19 | | FLEX2801 (PVDF-HFP) manufactured by ARKEMA | 55 | 155 |
| PTC-20 | | FLEX2851 (PVDF-HFP) manufactured by ARKEMA | 60 | 145 |

**[Table 10]**

| PTC Layer | PVDF | [X] | Resistance Increasing Start Temperature °C | Maximum Resistance Value Ω |
|---|---|---|---|---|
| PTC-0 | 7.5 | - | 110.0 | 20 |

From the results of the heat resistance test of the cathode shown in Tables 6 to 10 and Fig. 4, it was found that the cathode including the PTC layer according to the invention had the start temperature of the resistance increase of approximately from 55°C to 65°C as the temperature rises, and the temperature of the cathode including the PTC layer lowered as compared to a case where the binding material containing no PTC function-imparting component [X] was used. The maximum resistance value was greatly increased as the temperature rises.

### [Reference Example 1]

### PTC Layer Production

### 1. Slurry Preparation

A 5 L planetary disperser was used for the slurry preparation.

900 g of scale-like graphite (2 µm of average particle diameter, manufactured by TIMICAL Japan) and 25 g of Super-P (conductive carbon, manufactured by TIMCAL Japan) were mixed for 10 minutes, and then 200 g of N-methyl pyrrolidone (NMP) was added thereto and mixing was performed for 20 minutes.

Next, 62.5 g of a mixed liquid (BX1) obtained by dissolving 40 g of a mixture of BMI-1000/BTA= 2/1 in 1000 g of NMP, 62.5 g of an 8%-PVDF solution (PVDF W#7200, manufactured by KUREHA CORPORATION is dissolved in NMP), and 1000 g of NMP were mixed and then kneaded for 60 minutes. The solid content concentration at this time was 43% (1000 g of solid content, 1317.5 g of NMP).

Further, 1000 g of NMP was added thereto and kneading was performed for 60 minutes (30% solid content concentration).

Thereafter, 682.5 g of NMP was added for adjusting a viscosity and mixed for 30 minutes, and then vacuum defoaming was performed for 30 minutes. Slurry having 25% solid content concentration was thus prepared.

### 2. Coating and Drying

A die coater was used for slurry coating. One surface of an aluminum foil (thickness of 20 µm, width of 200 mm) was coated with the slurry and dried so that the coating thickness after drying was 5 µm (the coating weight is approximately 0.5 mg/cm²). Next, the opposite surface (uncoated surface) of the aluminum foil was coated with the slurry and dried so that, similarly, the coating thickness was 5 µm.

An aluminum foil roll was obtained by coating the thus-obtained both surfaces with the PTC layer (PTC-1R).

### Cathode Production

### 1. Slurry Preparation

A 5 L planetary disperser was used for the slurry preparation.

920 g of NCM 523 (composition formula: LiNi_{0.5}Co_{0.2}Mn_{0.3}O₂, manufactured by Umicore S.A.), 20 g of Super-P (conductive carbon, manufactured by TIMCAL Japan), and 20 g of KS-6 (scale-like graphite, manufactured by TIMREX) were mixed for 10 minutes, and then 50 g of N-methyl pyrrolidone (NMP) was added thereto and mixing was performed for 20 minutes.

Next, 250 g of an 8%-PVDF solution (PVDF W#7200, manufactured by KUREHA CORPORATION is dissolved in NMP) was added and kneading was performed for 30 minutes, and 250 g of an 8%-PVDF solution was further added and kneading was performed for 30 minutes. Next, 100 g of a solution dissolved in NMP was added and kneading was performed for 30 minutes. Thereafter, 29 g of NMP was added for adjusting a viscosity and mixing was performed for 30 minutes, and then vacuum defoaming was performed for 30 minutes. Slurry having 65% solid content concentration was thus prepared.

### 2. Coating and Drying

A die coater was used for slurry coating. One surface of an aluminum foil (aluminum foil thickness of 20 µm + PTC layer thickness of 5 µm (one surface), width of 200 mm) coated with the slurry was coated with the PTC layer (PTC-1) and dried so that the coating weight after drying was 19.0 mg/cm². Next, the opposite surface (uncoated surface) of the aluminum foil coated with the slurry was coated with the PTC layer (PTC-1R) and dried so that, similarly, the coating weight was 19.0 mg/cm² (C-1).

The thus-obtained cathode roll having both surfaces (38.0 mg/cm²) coated was dried in a vacuum drying oven at 130°C for 12 hours.

### 3. Press

A 35 tons press machine was used. A gap between an upper roller and a lower roller was adjusted, and the cathode was compressed so that a press density was 2.9 ± 0.05 g/cm³.

### 4. Slit

The electrode was slit to produce the cathode C-1 in which the PTC layer (PTC-1R) is disposed on the aluminum foil so that the cathode had an electrode distribution area (front surface: 56 mm x 334 mm, back surface: 56 mm x 408 mm) and a tab welding margin.

### Anode Production

### 1. Slurry Preparation

A 5 L planetary disperser was used for the slurry preparation.

930 g of natural graphite and 10 g of Super-P (conductive carbon, BET specific surface area of 62 m²/g) were mixed for 10 minutes, and then 500 g of NMP was added and mixing was performed for 20 minutes. Next, 500 g of an 8%-PVDF solution (PVDF is dissolved in NMP) was added and kneading was performed for 30 minutes, and 250 g of an 8%-PVDF solution was further added and kneading was performed for 30 minutes. Thereafter, 32 g of NMP was added for adjusting a viscosity and mixing was performed for 30 minutes, and then vacuum defoaming was performed for 30 minutes. Slurry having 45% solid content concentration was thus prepared.

### 2. Coating and Drying

A die coater was used for slurry coating.

The slurry was coated on one surface of the copper foil (thickness of 10 µm) and dried so that the coating weight after drying was 11.0 mg/cm². Next, the slurry was coated on the opposite surface (uncoated surface) of the copper foil and dried so that, similarly, the coating weight was 11.0 mg/cm². The thus-obtained anode roll having the coated both surfaces (22.0 mg/cm²) was dried in a vacuum drying oven at 120°C for 12 hours (A-1).

### 3. Press

A small-sized press machine was used.

A gap between an upper roller and a lower roller was adjusted, and the anode was compressed so that a press density was 1.45 ± 0.05 g/cm³.

### 4. Slit

The electrode was slit to produce the anode A-1 having an electrode distribution area (front surface: 58 mm x 372 mm, back surface: 58 mm x 431 mm) and a tab welding margin.

### Battery Production

### Wound-type Battery (Design Capacity of 1 Ah)

### 1. Winding

A polyethylene porous film (60.5 mm x 450 mm) having a porosity of 45% and a thickness of 25 µm was used for a separator (S-1).

The anode A-1 (front surface/back surface), the separator (S-1), the cathode C-1 (front surface/back surface) in which the PTC layer (PTC-1R) is disposed on the aluminum foil, and the separator (S-1) were stacked and wound, and then were press-formed. Next, the aluminum tab was bonded to the margin portion of the cathode C-1 in which the PTC layer (PTC-1R) is disposed by using an ultrasonic bonding machine, and the nickel tab was bonded to the margin portion of the anode A-1 by using an ultrasonic bonding machine. The laminate was sandwiched therebetween and three sides thereof were heat-sealed.

### 2. Electrolytic Solution

Before injecting an electrolytic solution, the obtained product was reduced-dried with a vacuum drier at 70°C for 12 hours. 4.7 ± 0.1 g of an electrolytic solution (1 mol-LiPF₆, EC/DEC = 3/7 (vol. ratio) and 1.0 weight% of an additive VC) was injected, and then heat-sealing was performed while being evacuated.

### 3. Activation Treatment

The battery after injecting the electrolytic solution was held for 24 hours. Next, the battery was subjected to a constant-current charging (0.05 C-CC) at 0.05 C for 4 hours, and then was suspended for 12 hours. Thereafter, the battery was subjected to a constant-current and constant-voltage charging (0.1 C-CCCV) to 4.2 V at 0.1 C, suspended for 30 minutes, and then subjected to a constant-current discharging (0.1 C-CC) to 2.8 V at 0.1 C. Further, a charge and discharge cycle (charging of 4.2 V at 0.1 C-CCCV and discharging of 2.8 V at 0.1 C-CC) was repeated 5 times, and then the battery was stored in a fully charged state of 4.2 V (SOC 100%) at 25°C for 5 days. A battery D-1 was thus obtained.

### [Examples 1 to 4]

The PTC layers represented by PTCs 1 to 4 in Table 6 were produced in the same manner as in Reference Example 1 except that the mixture of the PTC function-imparting components and the PVDF (PVDF W#7200, manufactured by KUREHA CORPORATION) in accordance with Reference Example 1 were replaced with the combination shown in Table 6, and in Examples 1 to 4, cathodes in which these PTC layers were disposed, respectively, were produced.

### [Examples 5 to 8]

The PTC layers represented by PTC-5 to PTC-8 in Table 6 were produced by using a binder liquid in which a PVDF-HFP copolymer is dissolved in NMP instead of the mixture of the PTC function-imparting components and the PVDF (PVDF W#7200, manufactured by KUREHA CORPORATION) in accordance with Reference Example 1.

### [Examples 9 to 12]

The PTC layers represented by PTC-9 to PTC-12 in Table 7 were produced by adding PE particles (Mipelon, manufactured by Mitsui Chemicals, Inc.) to be an insulator.

### [Examples 13 to 16]

The PTC layers represented by PTC-13 to PTC-16 in Table 8 were produced by adding alumina particles to be an insulator.

### [Comparative Examples 1 and 2]

A cathode including no PTC layer shown in Comparative Example 1 of Table 11 was produced in accordance with Reference Example 1. A cathode in which a PTC layer having the composition shown in Comparative Example 2 was disposed was produced in accordance with Reference Example 1.

Cathode of Comparative Examples 3 and 4 were produced by the same composition and method as in Comparative Examples 1 and 2 except that a cathode active material was changed to NCA instead of NCM523.

**[Table 11]**

| | | Cathode Layer | | | | | | | | PTC Layer | | | |
|---|---|---|---|---|---|---|---|---|---|---|---|---|---|
| | | NCM523 % | | Super-P % | | KS-6 % | | PVDF (7200) % | | Conductive Filler (Scale-like Graphite) % | | Super-P % | PVDF % |
| Comparative Example 1 | | 92 | | 2 | | 2 | | 4 | | - | | - | - |
| Comparative Example 2 | | 92 | | 2 | | 2 | | 4 | | 90 | | 2.5 | 7.5 |
| | | | | | | | | | | | | | |

| | Cathode Layer | | | | | | | | PTC Layer | | | | |
|---|---|---|---|---|---|---|---|---|---|---|---|---|---|
| | NCA % | | Super-P % | | KS-6 % | | PVDF (7200) % | | Conductive Filler (Scale-like Graphite) % | | Super-P % | | PVDF % |
| Comparative Example 3 | 92 | | 2 | | 2 | | 4 | | - | | - | | - |
| Comparative Example 4 | 92 | | 2 | | 2 | | 4 | | 90 | | 2.5 | | 7.5 |

### [Crushing Test]

A crushing test was performed by using the wound-type battery (design capacity of 1 Ah) produced in Reference Example 1. The central portion of the battery (cell) was pressed in a cylinder having a diameter of 10 mm at a speed of 1 mm/sec and crushed up to 50% of the depth of the battery thickness, and then the cathode and the anode were short-circuited in a battery container. As a result of examining a heat generation speed of the battery for 1 second immediately after heat generation started, the heat generation speed after the short-circuit of the crushing test was performed three times by using the battery produced by the same specification was 163°C/sec on average.

As a comparative example, the wound-type battery (design capacity of 1 Ah) was produced using only PVDF as a binding material without addition of a mixture of BMI-1000/BTA = 2/1 to the PTC layer in Reference Example 1. After the same crushing test was performed three times, the heat generation speed after the short-circuit was 406°C/sec on average.

Hereinafter, a specification of other batteries produced in the same specification as in Reference Example 1 and crushing test results (Tables 12 and 13) performed using the specification were summarized.

**[Table 12]**

| Crushing Test | | | | | | |
|---|---|---|---|---|---|---|
| Example | Type | Cathode | | Anode | Temperature Rise Coefficient °C/sec. | The Presence or Absence of Heat Generation Suppression Effect with respect to Comparative Example |
| | | Cathode Layer | PTC Layer | | | |
| Reference 1 | 1 Ah Winding | C-1 | PTC-1R | 1 | 163 | Present |
| 1 | | | PTC-1 | 1 | 93 | Present |
| 2 | | | PTC-2 | 1 | 93 | Present |
| 3 | | | PTC-3 | 1 | 93 | Present |
| 4 | | | PTC-4 | 1 | 181 | Present |
| 5 | | | PTC-5 | 1 | 96 | Present |
| 6 | | | PTC-6 | 1 | 99 | Present |
| 7 | | | PTC-7 | 1 | 99 | Present |
| 8 | | | PTC-8 | 1 | 102 | Present |
| 17 | | C-2 | PTC-5 | 1 | 543 | Present |
| 18 | | | PTC-6 | 1 | 408 | Present |
| 19 | | | PTC-7 | 1 | 466 | Present |
| 20 | | | PTC-8 | 1 | 652 | Present |

**[Table 13]**

| Crushing Test | | | | | | |
|---|---|---|---|---|---|---|
| Comparative Example | Type | Cathode | | Anode | Temperature Rise Coefficient °C/sec. | The Presence or Absence of Heat Generation Suppression Effect |
| | | Cathode Layer | PTC Layer | | | |
| 1 | 1 Ah Winding | C-1 | Absent | 1 | 542 | Absent |
| 2 | | C-1 | Present | 1 | 406 | Absent |
| 3 | | C-2 | Absent | 1 | 1052 | Absent |
| 4 | | C-2 | Present | 1 | 988 | Absent |

According to the results of the crushing test shown in Tables 12 and 13, it was found that the lithium ion battery including the PTC layer according to the invention had a temperature rise coefficient significantly lower than in Comparative Examples 1 to 4 and had heat generation suppression effect.

### [Reference Example 2]

### Production of PTC Layer Containing PE Particle

The PTC layer was produced in accordance with Reference Example 1. 850 g of scale-like graphite (2 µm of average particle diameter, manufactured by TIMICAL Japan) and 25 g of Super-P (conductive carbon, manufactured by TIMCAL Japan) were mixed for 10 minutes, and then 200 g of N-methyl pyrrolidone (NMP) and 50 g of PE powder (PE particles, average particle diameter of 5 µm, volume frequency of 45%, volume specific resistance of from 10⁻¹⁵ to 10⁻¹⁶, melting point of 136°C, manufactured by Mitsui Chemicals, Inc.) were further added and mixing was performed for 20 minutes.

Next, 62.5 g of a mixed liquid (BX1) obtained by dissolving 40 g of a mixture of BMI-1000/BTA= 2/1 in 1000 g of NMP, 62.5 g of an 8%-PVDF solution (PVDF W#7200, manufactured by KUREHA CORPORATION is dissolved in NMP), and 1000 g of NMP were mixed and then kneaded for 60 minutes.
··· The solid content concentration 43% (1000 g of solid content, 1317.5 g of NMP) 1000 g of NMP was further added and kneading was performed for 60 minutes.
··· The solid content concentration 30%

Thereafter, 682.5 g of NMP was added for adjusting a viscosity and mixed for 30 minutes, and then vacuum defoaming was performed for 30 minutes. Slurry having 25% solid content concentration was thus prepared.

The wound-type battery (design capacity of 1 Ah) was produced by the same method as in Reference Example 1 by using this slurry and the crushing test was performed by the same method as the above method. The PTC layer and the battery were produced by using various PTC function-imparting components instead of the mixture of BMI-1000/BTA= 2/1 used in Reference Example 3, the crushing test results performed by the same method as the above method are shown in Table 14 below.

**[Table 14]**

| Example | Type | Cathode | | Anode | Temperature Rise Coefficient °C/sec. | The Presence or Absence of Heat Generation Suppression Effect with respect to Comparative Example |
|---|---|---|---|---|---|---|
| | | Cathode Layer | PTC Layer | | | |
| Reference 2 | 1 Ah Winding | C-1 | PTC-2R | 1 | 181 | Present |
| 9 | | | PTC-9 | 1 | 99 | Present |
| 10 | | | PTC-10 | 1 | 93 | Present |
| 11 | | | PTC-11 | 1 | 102 | Present |
| 12 | | | PTC-12 | 1 | 96 | Present |
| 21 | | | PTC-9 | 1 | 534 | Present |
| 22 | | | PTC-10 | 1 | 572 | Present |
| 23 | | | PTC-11 | 1 | 562 | Present |
| 24 | | | PTC-12 | 1 | 526 | Present |

### [Reference Example 3]

### Production of PTC Layer Containing PE Particle

The PTC layer was produced by adding alumina particles having an average particle diameter of 3 µm instead of the PE particles (PE particles, average particle diameter of 5 µm, volume frequency of 45%, volume specific resistance of from 10⁻¹⁵ to 10⁻¹⁶, melting point of 136°C, manufactured by Mitsui Chemicals, Inc.) to produce a battery. The results of the crushing test performed by the same method as the above method are shown in Table 15 below.

**[Table 15]**

| Example | Type | Cathode | | Anode | Temperature Rise Coefficient °C/sec. | The Presence or Absence of Heat Generation Suppression Effect with respect to Comparative Example |
|---|---|---|---|---|---|---|
| | | Cathode Layer | PTC Layer | | | |
| Reference 3 | 1 Ah Winding | C-1 | PTC-3R | 1 | 192 | Present |
| 13 | | | PTC-13 | 1 | 142 | Present |
| 14 | | | PTC-14 | 1 | 121 | Present |
| 15 | | | PTC-15 | 1 | 142 | Present |
| 16 | | | PTC-16 | 1 | 96 | Present |

From the results of the heat resistance test of the cathode shown in Tables 7 and 8, it was confirmed that the cathode having the PTC layer according to the invention further contained the PE particles or the alumina particles in the PTC layer, such that the maximum resistance value according to the temperature rise was further increased. Also, from the results of the crushing test shown in Tables 14 and 15, it was confirmed that the lithium ion secondary battery according to the invention including the PTC layer in which the PE particles and the alumina particles are further contained had a temperature rise coefficient significantly lower than in Comparative Examples 1 to 4 and had heat generation suppression effect.

### Reference Signs List

- 1: Non-aqueous electrolyte secondary battery
- 10: Battery element
- 11: Cathode
- 11A: Cathode current collector
- 11B: Cathode active material layer
- 12: Anode
- 12A: Anode current collector
- 12B: Anode active material layer
- 13: Separator
- 14: Single cell layer
- 15: Conductive substrate
- 16: Conductive layer (PTC layer)
- 21: Cathode lead
- 22: Anode lead
- 30: Exterior body

## Claims

1. A current collector for a non-aqueous electrolyte secondary battery, the current collector comprising:
a conductive substrate; and
a conductive layer that is provided on at least one surface of the conductive substrate, the conductive layer containing a conductive filler and a binding material,
wherein the binding material contains polyvinylidene fluoride, as a binding component, and a positive thermal coefficient ("PTC") function-imparting component,
wherein the PTC functional-imparting component is a copolymer of poly(vinylidene fluoride-hexafluoropropylene) or a copolymer of poly(vinylidene fluoride-oxyethylene), and
wherein the PTC function-imparting component lowers one or more of a melting start temperature or a melting peak temperature of the binding material, which is measured by differential scanning calorimetry under coexistence of a non-aqueous electrolyte, as compared to a case of using only the binding component.

2. The current collector according to claim 1, wherein the PTC function-imparting component is a compound containing a carbonyl group or a cyano group.

3. The current collector according to claim 1 or 2, wherein a content of the PTC function-imparting component contained in the binding material is from 1 to 50 % by mass.

4. The current collector according to any one of claims 1 to 3, wherein the conductive layer further contains insulating crystalline polymer particles in an amount of from 1 to 50% by mass with respect to an entirety of the conductive layer.

5. The current collector according to claim 4, wherein the insulating crystalline polymer is polyethylene.

6. The current collector according to any one of claims 1 to 5, wherein the conductive layer further contains insulating inorganic oxide particles in an amount of from 1 to 50% by mass with respect to an entirety of the conductive layer.

7. The current collector according to claim 6, wherein the insulating inorganic oxide is at least one selected from the group consisting of alumina, aluminum hydroxide, boehmite, magnesia, magnesium hydroxide, zirconia, titania, silica, silicon dioxide, silicon carbide, aluminum nitride and boron nitride, and an average particle diameter of the particles is from 0.01 to 5 µm, wherein the average particle diameter is measured by a laser diffraction method in accordance with JIS Z8825.

8. An electrode comprising an electrode mixture layer that is provided on one surface or both surfaces of the current collector according to any one of claims 1 to 7, the electrode mixture layer containing an electrode active material that charges and discharges a lithium ion.

9. A non-aqueous electrolyte secondary battery comprising:
the electrode according to claim 8;
a separator; and
a non-aqueous electrolyte.

10. A non-aqueous electrolyte secondary battery comprising:
an electrode including a current collector and an electrode mixture layer that is provided on one surface or both surfaces of the current collector, the electrode mixture layer containing an electrode active material that charges and discharges a lithium ion;
a separator; and
a non-aqueous electrolyte,
wherein the current collector includes a conductive layer that is provided on a surface of the current collector, the conductive layer containing a conductive filler and a binding material, the binding material containing polyvinylidene fluoride, as a binding component, and a copolymer of a poly(vinylidene fluoride-hexafluoropropylene) or a copolymer of a poly(vinylidene fluoride-oxyethylene), and
wherein a melting peak temperature of the binding material measured by differential scanning calorimetry under coexistence of a non-aqueous electrolyte is in a range from 60°C to 90°C.

## Patentansprüche

1. Stromsammler für eine Sekundärbatterie mit nichtwässrigem Elektrolyt, wobei der Stromsammler umfasst:
ein leitfähiges Substrat; und
eine leitfähige Schicht, die auf wenigstens einer Oberfläche des leitfähigen Substrats bereitgestellt ist, wobei die leitfähige Schicht einen leitfähigen Füllstoff und ein Bindematerial enthält,
wobei das Bindematerial Polyvinylidenfluorid als eine bindende Komponente und eine funktionsvermittelnde Komponente mit positivem Wärmekoeffizienten ("PTC") enthält,
wobei die funktionsvermittelnde PTC-Komponente ein Copolymer aus Poly(vinylidenfluorid-Hexafluorpropylen) oder ein Copolymer aus Poly(vinylidenfluorid-Oxyethylen) ist, und
wobei die die funktionsvermittelnde PTC-Komponente eine oder mehrere einer Schmelzstarttemperatur oder einer Schmelzspitzentemperatur des Bindematerials, die durch Differential-Raster-Kalorimetrie unter Koexistenz eines nichtwässrigen Elektrolyten gemessen werden, im Vergleich zu einem Fall der Verwendung nur der Bindekomponente senkt.

2. Stromsammler nach Anspruch 1, wobei die funktionsvermittelnde PTC-Komponente eine Verbindung ist, die eine Carbonylgruppe oder eine Cyangruppe enthält.

3. Stromsammler nach Anspruch 1 oder 2, wobei ein Gehalt der in dem Bindematerial enthaltenen funktionsvermittelnden PTC-Komponente 1 bis 50 Masse-% beträgt.

4. Stromsammler nach einem der Ansprüche 1 bis 3, wobei die leitfähige Schicht ferner isolierende kristalline Polymerteilchen in einer Menge von 1 bis 50 Masse-%, bezogen auf eine Gesamtheit der leitfähigen Schicht, enthält.

5. Stromsammler nach Anspruch 4, wobei das isolierende kristalline Polymer Polyethylen ist.

6. Stromsammler nach einem der Ansprüche 1 bis 5, wobei die leitfähige Schicht ferner isolierende anorganische Oxidteilchen in einer Menge von 1 bis 50 Masse-%, bezogen auf eine Gesamtheit der leitfähigen Schicht, enthält.

7. Stromsammler nach Anspruch 6, wobei das isolierende anorganische Oxid wenigstens eines ist, das aus der Gruppe ausgewählt ist, die aus Aluminiumoxid, Aluminiumhydroxid, Böhmit, Magnesiumoxid, Magnesiumhydroxid, Zirconiumoxid, Titandioxid, Siliciumdioxid, Siliciumcarbid, Aluminiumnitrid und Bornitrid besteht, und ein durchschnittlicher Teilchendurchmesser der Teilchen 0,01 bis 5 µm beträgt, wobei der durchschnittliche Teilchendurchmesser durch ein Laserbeugungsverfahren gemäß JIS Z8825 gemessen wird.

8. Elektrode, umfassend eine Elektrodenmischungsschicht, die auf einer Oberfläche oder beiden Oberflächen des Stromsammlers nach einem der Ansprüche 1 bis 7 bereitgestellt ist, wobei die Elektrodenmischungsschicht ein aktives Elektrodenmaterial enthält, das ein Lithiumion lädt und entlädt.

9. Sekundärbatterie mit nichtwässrigem Elektrolyt, umfassend:
die Elektrode nach Anspruch 8;
einen Separator; und
einen nicht-wässrigen Elektrolyten.

10. Sekundärbatterie mit nichtwässrigem Elektrolyt, umfassend:
eine Elektrode, die einen Stromsammler und eine Elektrodenmischungsschicht beinhaltet, die auf einer Oberfläche oder beiden Oberflächen des Stromsammlers bereitgestellt ist, wobei die Elektrodenmischungsschicht ein aktives Elektrodenmaterial enthält, das ein Lithiumion lädt und entlädt;
einen Separator; und
einen nicht-wässrigen Elektrolyten,
wobei der Stromsammler eine leitfähige Schicht beinhaltet, die auf einer Oberfläche des Stromsammlers bereitgestellt ist, wobei die leitfähige Schicht einen leitfähigen Füllstoff und ein Bindematerial enthält, wobei das Bindematerial Polyvinylidenfluorid als eine Bindekomponente und ein Copolymer aus einem Poly(vinylidenfluorid-Hexafluorpropylen) oder ein Copolymer aus einem Poly(vinylidenfluorid-Oxyethylen) enthält, und
wobei eine Schmelzspitzentemperatur des Bindematerials, die durch Differential-Raster-Kalorimetrie unter Koexistenz eines nichtwässrigen Elektrolyten gemessen wird, in einem Bereich von 60 °C bis 90 °C liegt.

## Revendications

1. Collecteur de courant pour batterie secondaire à électrolyte non aqueux, le collecteur de courant comprenant :
un substrat conducteur ; et
une couche conductrice qui est prévue sur au moins une surface du substrat conducteur, la couche conductrice contenant une charge conductrice et un matériau de liaison,
dans lequel le matériau de liaison contient du fluorure de polyvinylidène, en tant que composant de liaison, et un composant conférant une fonction de coefficient thermique positif (« PTC »),
dans lequel le composant conférant une fonction PTC est un copolymère de poly(fluorure de vinylidène-hexafluoropropylène) ou un copolymère de poly(fluorure de vinylidène-oxyéthylène), et
dans lequel le composant conférant une fonction PTC abaisse un ou plusieurs parmi une température de début de fusion ou une température de pic de fusion du matériau de liaison, qui est mesurée par calorimétrie différentielle à balayage sous coexistence d'un électrolyte non aqueux, par rapport à un cas d'utilisation du composant de liaison seulement.

2. Collecteur de courant selon la revendication 1, dans lequel le composant conférant la fonction PTC est un composé contenant un groupe carbonyle ou un groupe cyano.

3. Collecteur de courant selon la revendication 1 ou 2, dans lequel une teneur en composant conférant la fonction PTC contenue dans le matériau de liaison est de 1 à 50 % en masse.

4. Collecteur de courant selon l'une quelconque des revendications 1 à 3, dans lequel la couche conductrice contient en outre des particules isolantes de polymère cristallin en une quantité de 1 à 50 % en masse par rapport à l'intégralité de la couche conductrice.

5. Collecteur de courant selon la revendication 4, dans lequel le polymère cristallin isolant est du polyéthylène.

6. Collecteur de courant selon l'une quelconque des revendications 1 à 5, dans lequel la couche conductrice contient en outre des particules isolantes d'oxyde inorganique en une quantité de 1 à 50 % en masse par rapport à l'intégralité de la couche conductrice.

7. Collecteur de courant selon la revendication 6, dans lequel l'oxyde inorganique isolant est au moins un oxyde choisi dans le groupe constitué par l'alumine, l'hydroxyde d'aluminium, la boehmite, la magnésie, l'hydroxyde de magnésium, la zircone, l'oxyde de titane, la silice, le dioxyde de silicium, le carbure de silicium, le nitrure d'aluminium et le nitrure de bore, et un diamètre moyen de particule des particules est de 0,01 à 5 µm, dans lequel le diamètre moyen de particule est mesuré par un procédé de diffraction laser selon JIS Z8825.

8. Electrode comprenant une couche de mélange d'électrodes qui est prévue sur une surface ou sur les deux surfaces du collecteur de courant selon l'une quelconque des revendications 1 à 7, la couche de mélange d'électrodes contenant un matériau actif d'électrode qui charge et décharge un ion lithium.

9. Batterie secondaire à électrolyte non aqueux comprenant :
l'électrode selon la revendication 8 ;
un séparateur ; et
un électrolyte non aqueux.

10. Batterie secondaire à électrolyte non aqueux comprenant :
une électrode comprenant un collecteur de courant et une couche de mélange d'électrodes qui est prévue sur une surface ou sur les deux surfaces du collecteur de courant, la couche de mélange d'électrodes contenant un matériau actif d'électrode qui charge et décharge un ion lithium ;
un séparateur ; et
un électrolyte non aqueux,
dans lequel le collecteur de courant comprend une couche conductrice qui est prévue sur une surface du collecteur de courant, la couche conductrice contenant une charge conductrice et un matériau de liaison, le matériau de liaison contenant du fluorure de polyvinylidène, en tant que composant de liaison, et un copolymère d'un poly(fluorure de vinylidène-hexafluoropropylène) ou un copolymère d'un poly(fluorure de vinylidène-oxyéthylène), et
dans lequel une température de pic de fusion du matériau de liaison mesurée par calorimétrie à balayage différentiel sous coexistence d'un électrolyte non aqueux est dans une plage allant de 60 °C à 90 °C.
